# EUROPÄISCHE PATENTSCHRIFT

(11) **EP 3 516 294 B1**
(45) Veröffentlichungstag und Bekanntmachung des Hinweises auf die Patenterteilung: **24.02.2021**
(21) Anmeldenummer: 17742159.1
(22) Anmeldetag: 17.07.2017
(51) Int. Cl.: B60Q 3/54, B60Q 3/64, F21V 8/00

(54) **BELEUCHTUNGSSYSTEM FÜR EIN INTERIEURMODUL**
LIGHTING SYSTEM FOR AN INTERIOR MODULE
SYSTÈME D'ÉCLAIRAGE POUR UN MODULE INTÉRIEUR

(30) Priorität: 23.09.2016 DE 102016011542
(43) Veröffentlichungstag der Anmeldung: 31.07.2019
(73) Patentinhaber: Audi AG, 85045 Ingolstadt (DE)
(72) Erfinder: KAUTZ, Oliver, 74177 Bad Friedrichshall (DE); SCHLÜTER, Daniel, 74074 Heilbronn (DE)
(86) Internationale Anmeldenummer: PCT/EP2017/000856
(87) Internationale Veröffentlichungsnummer: WO 2018/054511

(56) Entgegenhaltungen:
- WO-A1-2012/127389
- US-A1- 2008 019 115
- US-A1- 2009 141 476
- US-A1- 2013 250 607
- US-A1- 2015 192 728

## Beschreibung

Die vorliegende Erfindung betrifft ein Beleuchtungssystem für ein Interieurmodul eines Fahrzeugs sowie ein Herstellungsverfahren für ein Beleuchtungssystem.

Ein Innenraum eines Fahrzeugs ist beim Betrieb des Fahrzeugs, d. h. während einer Fahrt, sehr schwierig zu beleuchten, da Leuchtquellen, die durch Fenster des Fahrzeugs hindurch sichtbar sind, weitere Verkehrsteilnehmer blenden und/oder irritieren können und in einem Fußraum des Fahrzeugs angeordnete Leuchtquellen nur unzureichend nach oben abstrahlen, um bspw. einem Beifahrer ein Lesen einer Karte zu ermöglichen.

Im Stand der Technik sind Vorrichtungen zum Verteilen von Licht aus einer Leuchtquelle beschrieben.

Die deutsche Druckschrift DE 10 2006 023 593 A1 offenbart ein Lichtleitelement zur Verwendung in Kraftfahrzeugbauteilen. Das Lichtleitelement umfasst eine Lichteinkoppelfläche und eine Lichtauskoppelfläche und ist zumindest anteilig aus einem elastischen Material gebildet.

In der deutschen Offenlegungsschrift DE 10 2013 007 938 A1 ist ein Lichtleiter aus einem lichtleitenden Material mit an einer Oberfläche befindlichen Auskoppelstrukturen offenbart, wobei die Auskoppelstrukturen ein in Längsrichtung des Lichtleiters eingekoppeltes Licht in einem Winkel zu den Auskoppelstrukturen in die Umgebung des Lichtleiters auskoppeln.

Ein Verkleidungselement für einen Innenraum eines Fahrzeugs mit einer auf einem Basisteil des Verkleidungselements angeordneten lichtdurchlässigen Deckschicht ist in der deutschen Druckschrift DE 102 40 270 A1 offenbart.

In der deutschen Druckschrift DE 10 2010 023 247 A1 wird ein Ausstattungsteil für einen Innenraum eines Fahrzeugs mit einem Formkörper, an dem ein flächiger flexibler Lichtleiter angeordnet ist, vorgestellt.

Die deutsche Druckschrift DE 10 2013 100 941 A1 offenbart ein Innenverkleidungsteil, das auf einer Innenseite eines Trägerbauteils eine Licht emittierende Schicht aufweist.

In der französischen Druckschrift FR 2 991 936 A1 wird ein Verkleidungsteil mit einem unter einer Dekorschicht angeordneten Beleuchtungselement vorgestellt.

Aus der US 2009/141476 A1 ist eine Beleuchtungsvorrichtung bekannt mit einem Wellenleiter, in den eine Licht emittierende Quelle und ein photolumineszentes Material eingebettet sind. Ausgangslicht wird von mindestens einem Teil einer ersten Oberfläche des Wellenleiters emittiert.

Die US 2013/250607 A1 offenbart eine Lichtvorrichtung mit einem Lichtleiter. Der Lichtleiter hat mindestens eine Hauptseite, die eine Lichtextraktionsseite definiert. Die Lichtvorrichtung hat ferner mindestens eine nicht gewebte oder gewebte Faserschicht, die auf der Hauptseite des Lichtleiters angeordnet ist, die die Lichtextraktionsseite definiert. Auf der Lichtextraktionsseite weist die Lichtvorrichtung mehrere diskrete Verbindungsbereiche auf, an denen die mindestens eine Faserschicht mit der Hauptseite des Lichtleiters verbunden ist.

Die US 2008/019115 A1 betrifft eine Hintergrundbeleuchtung für eine Tastatureinheit. Die Hintergrundbeleuchtungseinheit umfasst eine Lichtleiterplatte mit einem Lichtleitermusterteil; mindestens eine Lichtemissionseinheit, die an einer Seitenwand der Lichtleiterplatte vorgesehen ist und Licht auf die Lichtleiterplatte strahlt; eine Tastatur, die über der Lichtleiterplatte positioniert ist und eine Harzschicht, eine Basisharzschicht, einen Zeichenöffnungsteil mit einer Zeichenform, eine Tastenanordnung, die an einer Seite vorgesehen ist, und eine Tastenhaftfolie, die auf einer oberen Oberfläche der Basisharzschicht vorgesehen ist.

Vor diesem Hintergrund ist es eine Aufgabe der vorgestellten Erfindung, eine Möglichkeit zum verkehrssicheren Beleuchten eines Fahrzeuginnenraums bereitzustellen

Die Erfindung wird definiert durch den Gegenstand der unabhängigen Ansprüche.

Es wird ein Beleuchtungssystem für ein Interieurmodul eines Fahrzeugs mit mindestens einer Leuchtquelle, mindestens einem Lichtleiter und mindestens einem Abstrahlelement vorgestellt, wobei der mindestens eine Lichtleiter zumindest teilweise aus Silikon besteht, und wobei das mindestens eine Abstrahlelement an zumindest einer Seite mit dem mindestens einen Lichtleiter optisch verbunden ist, und bei Betrieb des Beleuchtungssystems das mindestens eine Abstrahlelement durch den mindestens einen Lichtleiter mit von der mindestens einen Leuchtquelle erzeugtem Licht versorgt wird, wobei das Beleuchtungssystem derart flexibel ausgestaltet ist, dass sich das Beleuchtungssystem beim Verbinden mit einer Trägerschicht an eine Form der Trägerschicht anpasst.

Ausgestaltungen der vorgestellten Erfindung ergeben sich aus der Beschreibung und den abhängigen Ansprüchen.

Das vorgestellte Beleuchtungssystem dient insbesondere zur Beleuchtung eines Fahrzeuginnenraums mittels eines Abstrahlelements, das über einen Lichtleiter aus einer Leuchtquelle mit Licht versorgt wird. Das vorgestellte Beleuchtungssystem kann bspw. an einer Fahrzeugtür, einem Sitz oder einem Dachhimmel angeordnet, d. h. insbesondere in die Fahrzeugtür, den Sitz oder den Dachhimmel integriert sein. Erfindungsgemäß ist vorgesehen, dass das vorgestellte Beleuchtungssystem flexibel ausgestaltet ist und als Teil einer Oberflächenveredelung auf einen Träger, wie bspw. eine Innenstruktur einer Fahrzeugtür, aufgebracht wird und dabei eine jeweilige Form des Trägers annimmt.

Um das vorgestellte Beleuchtungssystem flexibel, d. h. verformbar, auszugestalten, ist vorgesehen, dass der erfindungsgemäß vorgesehene Lichtleiter zumindest teilweise aus Silikon, insbesondere aus transparentem Silikon besteht.

Unter einem Abstrahlelement ist im Kontext der vorliegenden Erfindung ein zum Abstrahlen von Licht geeignetes Material zu verstehen. Insbesondere ist das erfindungsgemäß vorgesehene Abstrahlelement flächig ausgebildet und ermöglicht dadurch eine vorteilhafte weite Ausleuchtung eines Fahrzeuginnenraums. Das erfindungsgemäß vorgesehene Abstrahlelement, das aus einem Vlies besteht, kann dabei als Diffusor zum Verteilen von Licht wirken.

Unter einem Interieurmodul ist im Kontext der vorgestellten Erfindung eine Komponente eines Fahrzeugs ausgewählt aus der folgenden Liste an Komponenten zu verstehen: Fahrzeugtür, Fahrzeugsitz, Verkleidung und Dachhimmel.

Unter der Formulierung "optisch verbunden" ist im Kontext der vorliegenden Erfindung ein Zustand zu verstehen, bei dem zwischen zwei Komponenten, wie bspw. einem Lichtleiter und einem Abstrahlelement, eine Verbindung besteht, durch die Licht von einer Komponente in die jeweils andere Komponente übertragen wird. Um einen derart optisch verbundenen Zustand zu realisieren, kann eine optische Verbindung zwischen bspw. einem Lichtleiter und einem Abstrahlelement aus einer Verbindungsschicht aufgebaut sein, die bspw. aus einer Klebeschicht aus transparentem Material besteht.

Unter der Formulierung "Verbinden mit einer Trägerschicht" ist im Kontext der vorgestellten Erfindung ein Vorgang zu verstehen, bei dem ein Objekt, wie bspw. das erfindungsgemäße Beleuchtungssystem mit einem Träger bzw. einer Oberflächenschicht eines Trägers in bspw. einem Kaschierprozess verbunden wird. Dabei wird das Beleuchtungssystem an den Träger gedrückt, so dass dieses seine räumliche Ausgestaltung gemäß einer räumlichen Ausgestaltung des Trägers ändert und sich an diesen insbesondere formschlüssig anfügt.

Es ist denkbar, dass das erfindungsgemäß vorgesehene Abstrahlelement teilweise oder ganzflächig mit dem erfindungsgemäß vorgesehenen Lichtleiter verbunden ist. Das Abstrahlelement kann bspw. als Vlies mit einer Dichte von insbesondere 50g/m² ausgestaltet sein und von dem Lichtleiter abgestrahlte Lichtstrahlen diffus verteilen. Dies bedeutet, dass das Abstrahlelement als Diffusor wirken kann. Das Abstrahlelement ist mit dem Lichtleiter über eine Klebefolie, wie bspw. eine Dispersionsfolie verbunden. Über das Abstrahlelement ist das erfindungsgemäße Interieurmodul mit einer Dekorware, wie bspw. einer Oberflächenschicht aus einem Textil oder Leder verbunden.

Um ein Abstrahlen von durch die erfindungsgemäß vorgesehene Leuchtquelle erzeugten Lichtstrahlen zu ermöglichen, ist es vorgesehen, dass eine auf das erfindungsgemäß vorgesehene Abstrahlelement aufgebrachte Oberflächenschicht zumindest eine Perforationsöffnung aufweist, durch die Lichtstrahlen in eine Umgebung eines entsprechenden Beleuchtungselements austreten können.

Der voranstehend beschriebene Aufbau aus einer Lichtleiterschicht, einer Schicht mit einem Abstrahlelement und einer Dekorschicht kann in einem industriellen Herstellungsprozess schnell und effizient für eine Vielzahl von Interieurmodulen bereitgestellt werden. Dabei kann die Dekorschicht bspw. transluzent oder transparent ausgestaltet sein.

Da das Abstrahlelement in erheblichem Maße Eigenschaften eines von dem vorgestellten Beleuchtungssystem abgestrahlten Lichts beeinflusst, sind verschiedene Formen bzw. Materialstrukturen des Abstrahlelements denkbar. Um bspw. diffuses Licht zu erzeugen, kann ein jeweiliges Abstrahlelement als Diffusor ausgestaltet sein, der bspw. eingefärbt ist. Das Abstrahlelement kann zumindest teilweise aus Polyurethan, insbesondere aus Polyurethanschaum oder aus einem Vlies, wie bspw. einem Spinnvlies bestehen. Durch rückseitiges, d. h. einer Umgebung zugewandtes, Aufgetragen von Diffusormaterial auf ein Abstrahlelement kann das Diffusormaterial in bspw. Perforationen des Abstrahlelements eindringen und entsprechend eine Leuchtcharakteristik des Abstrahlelements bestimmen. Weiterhin verhindert das Diffusormaterial, bspw. durch Bilden einer geschlossenen Oberfläche auf dem Abstrahlelement, ein Verschmutzen des Abstrahlelements, insbesondere von Perforationen des Abstrahlelements.

In einer möglichen Ausgestaltung des vorgestellten Interieurmoduls ist vorgesehen, dass die mindestens eine Leuchtquelle als integrativer Bestandteil in den mindestens einen Lichtleiter eingebettet ist.

Um ein Beleuchtungssystem bereitzustellen, das als komplettes Modul einbaufertig in einen Produktionsprozess eingebunden werden kann, ist insbesondere vorgesehen, dass die mindestens eine erfindungsgemäß vorgesehene Leuchtquelle in einen jeweiligen Lichtleiter eingebettet ist. Dabei kann die mindestens eine Lichtquelle mittels elektrischer Verbindungen in den Lichtleiter eingebettet sein, die bzgl. einer Länge des Lichtleiters länger sind, so dass die elektrischen Verbindungen bei ggf. auftretenden Verformungen des Beleuchtungssystems nicht brechen oder reisen und die Flexibilität des Beleuchtungssystems durch die mindestens eine Leuchtquelle nicht beeinträchtigt wird. Vorteilhafterweise ist die mindestens eine Leuchtquelle flächig und flexibel, bspw. in Form eines Leuchtbandes ausgestaltet.

In einer weiteren möglichen Ausgestaltung des vorgestellten Interieurmoduls ist vorgesehen, dass die transparente Klebeschicht aus einem reaktiven Foliensystem oder einer thermoplastischen Klebefolie besteht.

Zum Verbinden des erfindungsgemäß vorgesehenen Abstrahlelements und des erfindungsgemäß vorgesehenen Lichtleiters eignet sich insbesondere eine transparente oder translumineszente Folie, die selbst flexibel ist. Eine Klebefolie, d. h. eine Folie die selbst Klebeeigenschaften aufweist oder mit einem Klebematerial überzogen ist, kann schnell und ohne komplexe Bewegungsmuster in einem Serienfertigungsprozess zum Verbinden von Abstrahlelement und Lichtleiter genutzt werden. Selbstverständlich können auch mehrere Folien bzw. ein Foliensystem aus mehreren reaktiven und/oder nicht reaktiven Klebefolien verwendet werden.

In einer weiteren möglichen Ausgestaltung des vorgestellten Beleuchtungssystems ist vorgesehen, dass die mindestens eine Leuchtquelle außerhalb des mindestens einen Lichtleiters angeordnet ist und diesen bspw. über mindestens einen weiteren Lichtleiter mit Lichtstrahlen versorgt.

In einer weiteren möglichen Ausgestaltung des vorgestellten Beleuchtungssystems ist vorgesehen, dass der mindestens eine Lichtleiter zumindest auf einer dem mindestens einen Abstrahlelement entgegengesetzten Seite mit mindestens einem Reflektor verbunden ist, wobei der mindestens eine Reflektor zum Reflektieren von durch die mindestens eine Leuchtquelle erzeugten Lichtstrahlen in Richtung des mindestens einen Abstrahlelements konfiguriert ist.

Durch einen Reflektor, wie bspw. eine Metallfolie, die insbesondere in ein eingefärbtes Silikon eingebettet ist, können von dem erfindungsgemäß vorgesehenen Lichtleiter entgegengesetzt zu dem Abstrahlelement abgestrahlte Lichtstrahlen zurück in den Lichtleiter und letztlich in die Umgebung des Beleuchtungssystems reflektiert werden. Dies bedeutet, dass durch einen Reflektor eine Lichtausbeute einer jeweiligen Leuchtquelle des erfindungsgemäßen Beleuchtungssystems erhöht wird, so dass bspw. gegenüber einer Ausführungsform ohne Reflektor weniger Leuchtquellen oder Leuchtquellen mit einem geringeren Energieverbrauch verwendet werden können. Es ist denkbar, dass der Reflektor als Teil des Beleuchtungssystems ausgestaltet bzw. in das Beleuchtungssystem integriert ist.

Durch die Verwendung von eingefärbtem Silikon, d. h. bspw. in einem Siebdruckverfahren schwarz eingefärbtem Silikon, können Ungleichheiten in einem Abstrahlverhalten eines jeweiligen Reflektors vermieden oder zumindest reduziert werden.

Um einen bspw. in Silikon eingebetteten Reflektor mit dem erfindungsgemäß zumindest teilweise aus Silikon bestehenden Lichtleiter zu verbinden, kann bspw. Silikonkleber verwendet werden, der in einem Druckverfahren, wie bspw. einem Siebdruckverfahren, auf den Reflektor und/oder den Lichtleiter aufgetragen wird. Dabei kann vorgesehen sein, dass der Silikonkleber als Translationselement in einen Lichtstrahlenpfad eingebunden wird, so dass der Silikonkleber sich in einer vorgegebenen Weise auf einen Strahlengang jeweiliger von einer Leuchtquelle erzeugten Lichtstrahlen auswirkt und die Lichtstrahlen bspw. an eine vorgegebene Position innerhalb des Lichtleiters oder in eine Umgebung des Beleuchtungssystems ablenkt. Dazu kann der Silikonkleber mittels des Druckprozesses an exakt vorgegebene Stellen auf dem Lichtleiter und/oder dem Reflektor aufgebracht werden.

In einer weiteren möglichen Ausgestaltung des vorgestellten Beleuchtungssystems ist vorgesehen, dass der mindestens eine Reflektor an einer dem mindestens einen Abstrahlelement entgegensetzten Seite mit einer Zwischenschicht verbunden ist, die eine robuste Klebeverbindung des Beleuchtungssystems mit einem Trägermaterial ermöglicht.

Um einen Lichtleiter oder einen Reflektor, insbesondere einen Reflektor, der in ein Silikon eingebettet ist, mit einem Trägermaterial zu verbinden, eignet sich insbesondere eine Zwischenschicht, wie bspw. ein Vlies, das sowohl mit einem Silikon als auch mit einem Träger aus bspw. einem Kunststoff zu verbinden ist.

In dem vorgestellten Beleuchtungssystem ist vorgesehen, dass das mindestens eine Abstrahlelement formschlüssig in die mindestens eine Perforationsöffnung der Dekorschicht eingreift und mit der Dekorschicht eine glatte Oberfläche bildet, die im Wesentlichen dicht gegenüber Verschmutzung ist.

Durch einen formschlüssigen Eingriff des erfindungsgemäß vorgesehenen Abstrahlelements in jeweilige Perforationsöffnungen einer Dekorschicht, kann eine glatte Oberfläche geschaffen werden, die durch das erfindungsgemäße Beleuchtungssystem beleuchtbar bzw. zu beleuchten, d. h. insbesondere zu hinterleuchten, ist. Eine derart glatte Oberfläche ist im Wesentlichen dicht gegenüber Verschmutzungen.

In einer weiteren möglichen Ausgestaltung des vorgestellten Beleuchtungssystems ist vorgesehen, dass der mindestens eine Lichtleiter lichtleitende Fasern umfasst.

Um eine Verteilung von Licht innerhalb des Lichtleiters zu erreichen, kann der Lichtleiter lichtleitende Fasern, wie bspw. Glasfasern umfassen, die in ein Füllmaterial des Lichtleiters, wie bspw. einen Kunststoff oder ein Silikon eingearbeitet sind. Die lichtleitenden Fasern nehmen Licht, das von einer Leuchtquelle bereitgestellt wird, auf und leiten das Licht durch den Lichtleiter in das erfindungsgemäß vorgesehene Abstrahlelement.

Lichtleitende Fasern eignen sich besonders vorteilhaft zum Verteilen von Licht, da diese sowohl durch enge Stellen, wie bspw. eine Naht geführt werden können, als auch zum Ausleuchten einer großen Oberfläche verwendet werden können. Insbesondere ist vorgesehen, dass eine Leuchtquelle bzw. lichtleitende Fasern in einen Keder bzw. eine Biese eines Dekorelements, das bspw. eine Fahrzeugtür zu einem Innenraum hin abgrenzt, eingebettet ist bzw. sind.

In einer weiteren möglichen Ausgestaltung des vorgestellten Beleuchtungssystems ist vorgesehen, dass die mindestens eine Leuchtquelle zumindest teilweise in eine Naht eines die Fahrzeugtür nach außen hin abgrenzenden Stoffs eingebracht ist.

Um eine Leuchtquelle platzsparend und ästhetisch ansprechend an einer Fahrzeugtür anzuordnen, kann ein Nahtgraben von bspw. einer Doppelkappnaht verwendet werden, in dem bspw. ein Halter zur Aufnahme der Leuchtquelle vernäht ist. Dies bedeutet, dass ein Halter, der bspw. von einem Grundgerüst einer Fahrzeugtür bereitgestellt wird, in den Nahtgraben der Naht eingreift, um die Leuchtquelle dort zu fixieren bzw. aufzunehmen. Weiterhin ist es in Ausgestaltung vorgesehen, dass das erfindungsgemäß vorgesehene Abstrahlelement flächig auf einem Grundgerüst einer Fahrzeugtür angeordnet wird und sich in seinen Abmaßen entlang eines Bereichs um eine Bedieninsel der Fahrzeugtür erstreckt.

Unter "Aufkleben" ist im Kontext der vorgestellten Erfindung ein Verbinden zweier Gewebe mittels eines Verbindungsmaterials zu verstehen, wobei das Verbindungsmaterial bspw. als Dispersionskleber, 2-Komponentenkleber, Hotmelt, lösungsmittelhaltiger Kleber oder jedes weitere technisch geeignete Material zum Verbinden zweier Gewebe ausgestaltet sein kann.

Es ist denkbar, dass der erfindungsgemäß vorgesehene Lichtleiter UV- oder temperaturhärtendes Silikon aufweist und bei einem Herstellungsprozess zunächst das Abstrahlelement und/oder der Reflektor auf den Lichtleiter in einem Zustand aufgetragen werden, in dem der Lichtleiter flüssig bzw. pastös ist, und der Lichtleiter später gehärtet wird.

Ferner betrifft die vorliegende Erfindung ein Herstellungsverfahren für ein Beleuchtungssystem für ein Interieurmodul eines Fahrzeugs, bei dem mindestens ein Lichtleiter, der zumindest teilweise aus Silikon besteht, mit mindestens einem Abstrahlelement optisch verbunden wird, und das mindestens eine Abstrahlelement durch den mindestens einen Lichtleiter mit von der mindestens einen Leuchtquelle erzeugtem Licht versorgt wird, und bei dem ein Silikonanteil des mindestens einen Lichtleiters derart gewählt wird, dass das Beleuchtungssystem flexibel ist und sich beim Verbinden mit einer Trägerschicht an eine Form der Trägerschicht anpasst.

Erfindungsgemäß besteht das mindestens eine Abstrahlelement zumindest teilweise aus einem Vlies und wird mit einer Dekorschicht verklebt, die mindestens eine Perforationsöffnung aufweist, und wird der mindestens eine Lichtleiter über eine in einem Druckprozess auf den mindestens einen Lichtleiter und/oder auf mindestens einen Reflektor aufgebrachte Klebeschicht mit dem mindestens einen Reflektor verbunden und greift das mindestens eine Abstrahlelement formschlüssig in die mindestens eine Perforationsöffnung der Dekorschicht ein und bildet mit der Dekorschicht eine glatte Oberfläche, die im Wesentlichen dicht gegenüber Verschmutzung ist.

Das vorgestellte Herstellungsverfahren dient insbesondere zur Herstellung des vorgestellten Beleuchtungssystems.

Das vorgestellte Herstellungsverfahren sieht insbesondere vor, dass ein Lichtleiter, der zumindest teilweise aus Silikon besteht, mit einem Abstrahlelement optisch verbunden wird, um von einer Leuchtquelle erzeugte Lichtstrahlen durch das Abstrahlelement abzuleiten. Dabei ist vorgesehen, dass der Lichtleiter und das Abstrahlelement sowie ggf. weitere vorzusehende Komponenten derart gewählt werden, dass ein entsprechendes Beleuchtungssystem flexibel, d. h. verformbar bleibt. Um ein Beleuchtungssystem flexibel zu gestalten, können insbesondere Schichtdicken jeweiliger Schichten, wie bspw. des Lichtleiters oder des Abstrahlelements, auf ein zulässiges Höchstmaß begrenzt werden.

Weiterhin kann das erfindungsgemäße Beleuchtungssystem dadurch flexibel ausgestaltet werden, dass ein Silikonanteil in bspw. dem Lichtleiter derart hoch gewählt wird, dass sich der Lichtleiter bei einer vorgegebenen Schichtdicke noch verformen kann. Insbesondere ist es vorgesehen, dass der Lichtleiter, bis auf eine ggf. in den Lichtleiter integrierte Leuchtquelle, komplett aus Silikon gefertigt ist und entsprechend flexibel ist.

In dem vorgestellten Herstellungsverfahren ist es vorgesehen, dass das mindestens eine Abstrahlelement mit einer Dekorschicht verklebt wird, die mindestens eine Perforationsöffnung aufweist. Dabei ist weiterhin vorgesehen, dass der mindestens eine Lichtleiter über eine in einem Druckprozess auf den mindestens einen Lichtleiter und/oder auf mindestens einen Reflektor aufgebrachte Klebeschicht mit dem mindestens einen Reflektor verbunden wird.

Insbesondere ist es vorgesehen, dass jeweilige Schichten zur Herstellung des erfindungsgemäßen Beleuchtungssystems in einem Druckverfahren aufeinander aufgebracht werden, in dem bspw. Klebeschichten mit einem Drucker, wie bspw. einem Siebdrucker auf jeweilige Schichten aufgebracht werden.

In einer weiteren möglichen Ausgestaltung des vorgestellten Herstellungsverfahrens ist es vorgesehen, dass der mindestens eine Reflektor derart bearbeitet, insbesondere bedruckt ist, dass eine gleichmäßige Abstrahlung von Lichtstrahlen zurück in den mindestens einen Lichtleiter durch den mindestens einen Reflektor erfolgt.

Um das erfindungsgemäße Beleuchtungssystem mit einem Träger, wie bspw. einem Innenaufbau einer Fahrzeugtür oder eines Sitzes zu verbinden und das Beleuchtungssystem entsprechend in die Fahrzeugtür bzw. den Sitz zu integrieren, kann es vorgesehen sein, dass eine Zwischenschicht an dem Reflektor, der insbesondere zumindest teilweise aus Silikon besteht, angeordnet wird. Dazu kann die Zwischenschicht, die bspw. aus einem Vlies besteht, mit dem Reflektor bspw. mittels einer Klebefolie aus Polyurethan verklebt werden. Die Zwischenschicht ist dabei derart beschaffen, dass diese mit einem jeweiligen Träger verbindbar, d. h. insbesondere verklebbar ist. Es ist insbesondere vorgesehen, dass das erfindungsgemäße Beleuchtungssystem aus einem Schichtenaufbau besteht, der aus einer Lichtleiterschicht besteht, die auf einer einer Umgebung zugewandten Seite mit einem Abstrahlelement aus bspw. einem Vlies verklebt und auf einer der Umgebung abgewandten Seite mit einem Reflektor verklebt ist. Dabei kann der Reflektor seinerseits auf der der Umgebung abgewandten Seite mit einem Vlies, wie bspw. einem Spinnvlies verklebt sein, so dass das Beleuchtungssystem als flächiges Gewirke innerhalb zweier Schichten Vlies ausgestaltet sein kann. Entsprechend eignet sich das Beleuchtungssystem zum Einbringen in Interieurmodule, wobei das Beleuchtungssystem aufgrund seiner erfindungsgemäß vorgesehenen Flexibilität entsprechend einer Form einer jeweiligen Dekorschicht und/oder eines jeweiligen Trägers angepasst werden kann.

Eine gleichmäßige Abstrahlung eines Reflektors eines jeweiligen Beleuchtungselements, d. h. eine Vermeidung von Helligkeitsunterschieden beim Abstrahlen von Lichtstrahlen durch den Reflektor kann bspw. durch eine Einfärbung des Reflektors, mit bspw. schwarzer Farbe erreicht werden.

Das vorgestellte Beleuchtungssystem ermöglicht eine Herstellung von Beleuchtungssystemen bzw. Interieurkomponenten mit besonders angenehmen haptischen Eigenschaften von bspw. einer Shore Härte von A 80 und weniger.

In einer weiteren möglichen Ausgestaltung des vorgestellten Herstellungsverfahrens ist es vorgesehen, dass der mindestens eine Reflektor aus Silikon besteht und lokal gemäß vorgegebenen lichttechnischen Erfordernissen zumindest teilweise lichtundurchlässig ausgestaltet wird. Dabei ist es vorgesehen, dass der mindestens eine Reflektor mit einer Zwischenschicht verbunden wird, die eine robuste Klebeverbindung des Beleuchtungssystems mit einem Trägermaterial ermöglicht.

Um einen jeweiligen Reflektor eines Beleuchtungselements lokal gemäß vorgegebenen lichttechnischen Erfordernissen zumindest teilweise lichtundurchlässig auszugestalten, kann es vorgesehen sein, dass der Reflektor manipuliert, d. h. bspw. gedrückt, gestreckt gestaucht oder bedruckt wird. Dabei kann es insbesondere vorgesehen sein, dass der Reflektor zumindest teilweise schwarz bedruckt wird, so dass lokale Ungleichheiten einer durch den Reflektor abgestrahlten Lichtmenge vermieden oder zumindest reduziert werden.

In einer weiteren möglichen Ausgestaltung des vorgestellten Herstellungsverfahrens ist es vorgesehen, dass der Lichtleiter in einem ersten Schritt über einen Kleber mit dem Abstrahlelement und/oder dem Reflektor verbunden wird, wobei der Kleber in einem zweiten Schritt aktiviert wird.

Um nach einem Aufbringen eines Abstrahlelements und/oder eines Reflektors auf den Lichtleiter ein Ausrichten bzw. Nachbearbeiten einer Position des Lichtleiters an dem Abstrahlelement bzw. Reflektor zu ermöglichen, kann ein Kleber verwendet werden, der in einem ersten Schritt aufgebracht und in einem zweiten Schritt aktiviert wird, so dass eine Fixierung der Position des Abstrahlelementes bzw. Reflektors an dem Lichtleiter erst durch den zweiten Schritt, d. h. die Aktivierung erfolgt.

Weitere Vorteile und Ausgestaltungen der Erfindung ergeben sich aus der Beschreibung sowie den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Zeichnungen schematisch dargestellt und wird unter Bezugnahme auf die Zeichnungen schematisch und ausführlich beschrieben.
Figur 1 zeigt eine mögliche Ausgestaltung des erfindungsgemäßen Beleuchtungssystems.
Figur 2 zeigt ein Verfahren zur Herstellung einer Dekorschicht, die zur Verbindung mit einer möglichen Ausgestaltung des erfindungsgemäßen Beleuchtungssystems geeignet ist.
Figur 3 zeigt eine schematische Darstellung einer möglichen Ausgestaltung des erfindungsgemäßen Herstellungsverfahrens.

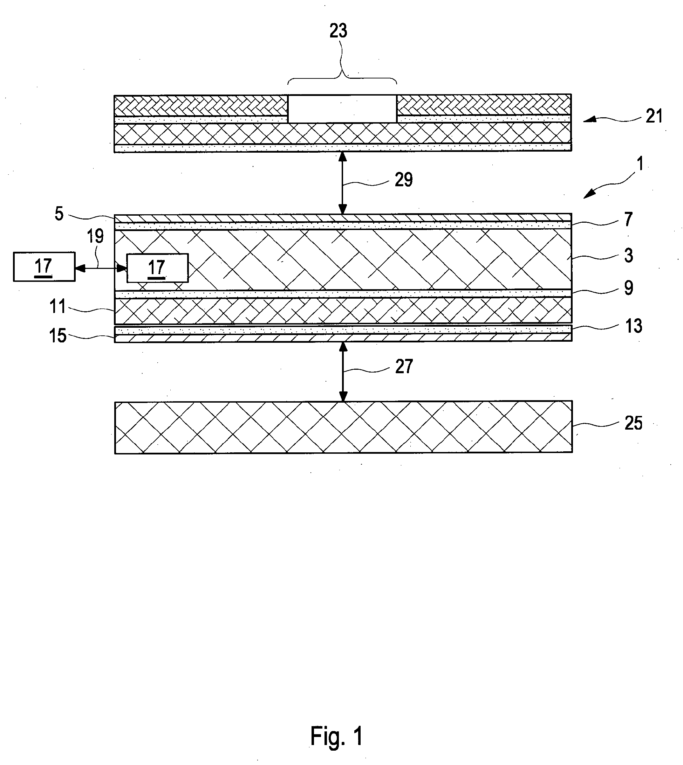

In Figur 1 ist ein Beleuchtungssystem 1 dargestellt. Das Beleuchtungssystem 1 umfasst einen Lichtleiter 3, der mit einem Abstrahlelement 5 über eine Klebeschicht 7 aus Dispersionsfolie verbunden ist. Weiterhin ist der Lichtleiter 3 über eine Klebeschicht 9 aus Silikonkleber mit einem Reflektor 11 verbunden. Der Reflektor 11 ist wiederum über eine Klebeschicht 13 aus Dispersionsfolie mit einer Zwischenschicht 15 verbunden. Die Zwischenschicht 15 dient zum Verbinden des Beleuchtungssystems 1 mit einem Träger 25, wie bspw. einem Verkleidungsteil eines Fahrzeugs, in einem Fügeprozess.

Zum Verbinden des Beleuchtungssystems 1 mit dem Träger 25 wird das Beleuchtungssystem 1, das aufgrund eines hohen Silikonanteils in dem Lichtleiter 3 und dem Reflektor 11 flexibel ist, einer Form des Trägers 25 angepasst, d. h. bspw. an den Träger 25 gepresst und anschließend in einem Fügeprozess mit dem Träger 25 verbunden, wie durch Pfeil 27 angedeutet. Dazu kann die Zwischenschicht 15 bspw. mit dem Träger 25 verklebt oder vernäht werden.

Zum Beleuchten des Lichtleiters 3 und, dadurch bedingt, des Beleuchtungssystems 1, ist eine Leuchtquelle 17 vorgesehen, die, wie durch einen Pfeil 19 angedeutet, innerhalb des Lichtleiters 3 oder außerhalb des Lichtleiters 3 angeordnet sein kann.

Um die Leuchtquelle 17 ästhetisch ansprechend gegenüber einer Umgebung, wie bspw. einem Fahrzeuginnenraum abzuschirmen, kann eine Dekorschicht 21 vorgesehen sein, die mindestens eine Perforationsöffnung 23 aufweist, um von dem Beleuchtungssystem 1 abgestrahltes Licht in eine Umgebung des Beleuchtungssystems 1 abzustrahlen. Die Dekorschicht 21 wird in einem Fügeprozess mit der Leuchtquelle 17 über das Abstrahlelement 5 und die Klebeschicht 7 optisch verbunden, wie durch Pfeil 29 angedeutet.

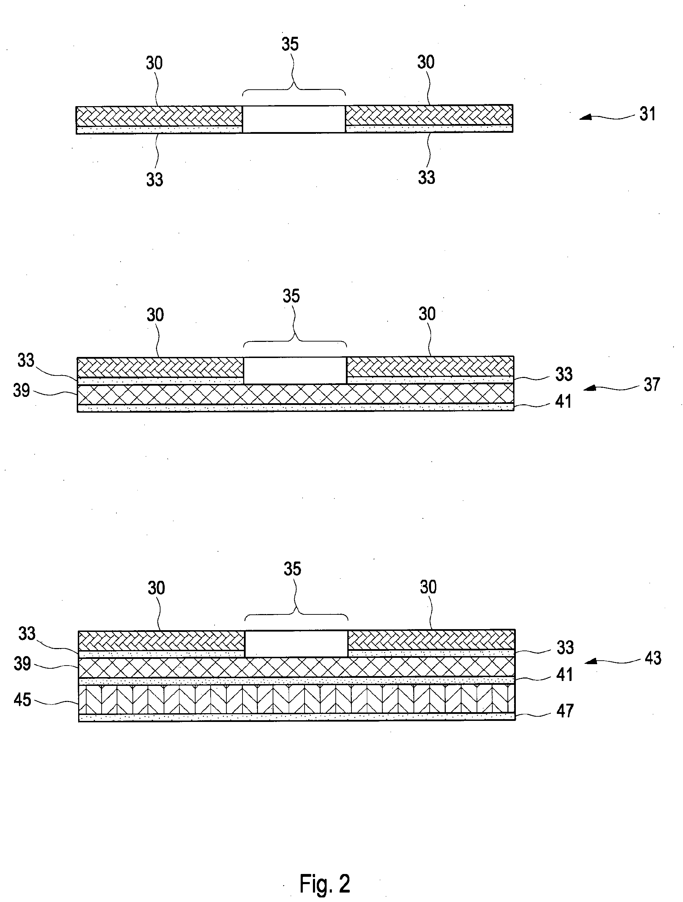

In Figur 2 ist ein Verfahren zur Herstellung einer Dekorschicht dargestellt. Ausgehend von einem Dekorstoff 30, der bspw. ein bestimmtes Muster aufweist, wird in einem ersten Schritt 31 auf den Dekorstoff 30 eine Klebefolie 33 aus bspw. Polyethersulfon aufgetragen. Dabei kann die Klebefolie 33 während eines Herstellungsprozesses zur besseren Verarbeitung mit einer Schutzfolie umgeben sein. Sobald die Klebefolie 33 mit dem Dekorstoff 30 verbunden ist, kann mindestens eine Perforationsöffnung 35 in die Dekorschicht aus Dekorstoff 30 und Klebefolie 33 eingebracht werden, um die Dekorschicht lichtdurchlässig zu gestalten. Um ein Eindringen von Partikeln durch die mindestens eine Perforationsöffnung 35 zu vermeiden, wird in einem zweiten Schritt 37 eine Schutzschicht 39 aus bspw. Polyurethan an der Klebefolie 33 angeordnet. Die Schutzschicht 39 ist ihrerseits ebenfalls mit einer Klebeschicht 41 aus bspw. Polyethersulfon verbunden.

In einem dritten Schritt 43 kann eine Abstandsstrickware 45 vorgesehen werden, um bspw. einen vorgegebenen Abstand zwischen Dekorstoff 30 und einem Lichtleiter einzuhalten, d. h. eine äquidistante Abbildung einer Designfläche auf einem jeweiligen Beleuchtungssystem zu ermöglichen. Dazu wird die Abstandsstrickware 45 mit der Klebeschicht 41 verbunden. Die Abstandsstrickware 45 ist ihrerseits mit einer Klebefolie 47 aus bspw. Polyethersulfon verbunden, mittels derer die Dekorschicht mit einem Beleuchtungsmodul, wie bspw. dem Beleuchtungssystem 1 gemäß Figur 1 zu verbinden ist, indem die Dekorschicht mit einem Abstrahlelement des Beleuchtungsmoduls verbunden wird.

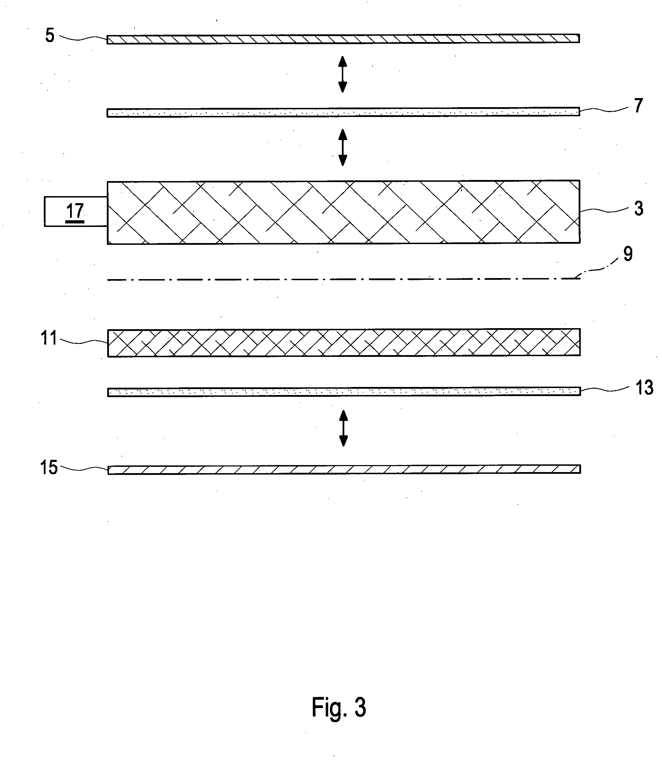

In Figur 3 ist ein Herstellungsverfahren zur Herstellung des Beleuchtungssystems 1 gemäß Figur 1 dargestellt.

Zur Herstellung des Leichtleiters 3 wird ein Silikonformteil gegossen, in das ggf. Leuchtquellen 17 eingearbeitet sind. Alternativ kann der Lichtleiter 3 über weitere Lichtleiter mit Licht aus der Leuchtquelle 17 versorgt werden, wenn die Leuchtquelle außerhalb des Lichtleiters 3 angeordnet ist.

Der Lichtleiter 3 wird in einem Klebeprozess, bei dem bspw. ein aktivierbarer Kleber verwendet wird, über die Klebeschicht 7 mit dem Abstrahlelement 5, das bspw. aus Vlies besteht und entsprechend als Diffusor wirkt, verbunden.

Weiterhin wird der Lichtleiter 3 mit dem Reflektor 11 verbunden. Dazu wird eine Klebeschicht 9 aus Silikonkleber in einem Druckverfahren, wie bspw. einem Siebdruckverfahren auf den Lichtleiter 3 und/oder den Reflektor 11 aufgebracht. Ferner wird der Reflektor 11 schwarz eingefärbt, um eine Generierung von Leuchtflecken beim Beleuchten des Reflektors mit Licht aus der Leuchtquelle 17 zu vermeiden.

Schließlich wird die Zwischenschicht 15 über die Klebefolie 13 mit dem Reflektor 11 verbunden. Die Zwischenschicht 15 kann bspw. ein Vlies, insbesondere ein Spinnvlies sein und dient zum Ermöglichen einer stabilen Verbindung des Beleuchtungssystems 1 mit einem Träger aus bspw. einem Kunststoff.

## Patentansprüche

1. Beleuchtungssystem (1) für ein Interieurmodul eines Fahrzeugs mit mindestens einer Leuchtquelle (17), mindestens einem Lichtleiter (3) und mindestens einem Abstrahlelement (5), wobei der mindestens eine Lichtleiter (3) zumindest teilweise aus Silikon besteht, und wobei das mindestens eine Abstrahlelement (5) an zumindest einer Seite mit dem mindestens einen Lichtleiter (3) optisch verbunden ist, und bei Betrieb des Beleuchtungssystems (1) das mindestens eine Abstrahlelement (5) durch den mindestens einen Lichtleiter (3) mit von der mindestens einen Leuchtquelle (17) erzeugtem Licht versorgt wird, wobei das Beleuchtungssystem (1) derart flexibel ausgestaltet ist, dass sich das Beleuchtungssystem (1) beim Verbinden mit einer Trägerschicht (25) an eine Form der Trägerschicht (25) anpasst, **dadurch gekennzeichnet, dass** das mindestens eine Abstrahlelement (5) zumindest teilweise aus einem Vlies besteht und mit einer Dekorschicht (21) verbunden ist, die mindestens eine Perforationsöffnung (23, 35) zum Austritt von durch das mindestens eine Abstrahlelement (5) abgestrahlten Lichtstrahlen aufweist und das mindestens eine Abstrahlelement (5) formschlüssig in die mindestens eine Perforationsöffnung (23, 35) der Dekorschicht (21) eingreift und mit der Dekorschicht (21) eine glatte Oberfläche bildet, die im Wesentlichen dicht gegenüber Verschmutzung ist.

2. Beleuchtungssystem nach Anspruch 1, wobei die mindestens eine Leuchtquelle (17) als integrativer Bestandteil in den mindestens einen Lichtleiter (3) eingebettet ist.

3. Beleuchtungssystem nach Anspruch 1 oder 2, wobei das mindestens eine Abstrahlelement (5) mit dem mindestens einen Lichtleiter (3) über eine transparente Klebeschicht (7) verbunden ist.

4. Beleuchtungssystem nach Anspruch 3, wobei die transparente Klebeschicht (7) zumindest aus einem reaktiven Foliensystem oder einer thermoplastischen Klebefolie besteht.

5. Beleuchtungssystem nach einem der voranstehenden Ansprüche, wobei der mindestens eine Lichtleiter (3) zumindest auf einer dem mindestens einen Abstrahlelement (5) abgewandten Seite mit mindestens einem Reflektor (11) verbunden ist, wobei der mindestens eine Reflektor (11) zum Reflektieren von durch die mindestens eine Leuchtquelle (17) erzeugten Lichtstrahlen in Richtung des mindestens einen Abstrahlelements (5) konfiguriert ist.

6. Beleuchtungssystem nach Anspruch 5, wobei der mindestens eine Reflektor (11) an einer dem mindestens einen Abstrahlelement (5) abgewandten Seite mit einer Zwischenschicht (15) verbunden ist, die eine robuste Klebeverbindung des Beleuchtungssystems (1) mit einem Trägermaterial (25) ermöglicht.

7. Beleuchtungssystem nach Anspruch 5 oder 6, wobei das Beleuchtungssystem (1) den mindestens einen Reflektor (11) umfasst.

8. Beleuchtungssystem nach Anspruch 6, wobei die Zwischenschicht (15) zumindest teilweise aus einem Vlies besteht.

9. Beleuchtungssystem nach einem der Ansprüche 5 bis 8, wobei der mindestens eine Reflektor (11) zumindest teilweise bearbeitet, insbesondere teilweise bedruckt ist, wodurch eine gleichmäßige Abstrahlung von Lichtstrahlen zurück in den mindestens einen Lichtleiter (3) durch den mindestens einen Reflektor (11) erfolgt.

10. Herstellungsverfahren für ein Beleuchtungssystem (1) für ein Interieurmodul eines Fahrzeugs nach einem der Ansprüche 5 bis 9, bei dem mindestens ein Lichtleiter (3), der zumindest teilweise aus Silikon besteht, mit mindestens einem Abstrahlelement (5) optisch verbunden wird, und das mindestens eine Abstrahlelement (5) durch den mindestens einen Lichtleiter (3) mit von der mindestens einen Leuchtquelle (3) erzeugtem Licht versorgt wird, und bei dem ein Silikonanteil des mindestens einen Lichtleiters (3) derart gewählt wird, dass das Beleuchtungssystem (1) flexibel ist und sich beim Verbinden mit einer Trägerschicht (25) an eine Form der Trägerschicht (25) anpasst, **dadurch gekennzeichnet, dass** das mindestens eine Abstrahlelement (5) zumindest teilweise aus einem Vlies besteht und das mindestens eine Abstrahlelement (5) mit einer Dekorschicht (21) verklebt wird, die mindestens eine Perforationsöffnung (23, 35) aufweist, und bei dem der mindestens eine Lichtleiter (3) über eine in einem Druckprozess auf den mindestens einen Lichtleiter (3) und/oder auf mindestens einen Reflektor (11) aufgebrachte Klebeschicht (9) mit dem mindestens einen Reflektor (11) verbunden wird und das mindestens eine Abstrahlelement (5) formschlüssig in die mindestens eine Perforationsöffnung (23, 35) der Dekorschicht (21) eingreift und mit der Dekorschicht (21) eine glatte Oberfläche bildet, die im Wesentlichen dicht gegenüber Verschmutzung ist.

11. Herstellungsverfahren nach Anspruch 10, bei dem der mindestens eine Reflektor (11) aus Silikon besteht und mittels eines Druckverfahrens lokal gemäß vorgegebenen lichttechnischen Erfordernissen zumindest teilweise lichtundurchlässig ausgestaltet wird, und bei dem der mindestens eine Reflektor (11) mit einer Zwischenschicht (15) verbunden wird, die eine robuste Klebeverbindung des Beleuchtungssystems (1) mit einem Trägermaterial (25) ermöglicht.

## Claims

1. Lighting system (1) for an interior module of a vehicle, comprising at least one light source (17), at least one light guide (3) and at least one emission element (5), wherein the at least one light guide (3) consists at least partly of silicone, and wherein the at least one emission element (5) is optically connected to the at least one light guide (3) on at least one side, and during the operation of the lighting system (1), the at least one emission element (5) is provided with light generated by the at least one light source (17) by means of the at least one light guide (3), wherein the lighting system (1) is flexibly designed such that upon being connected to a support layer (25), the lighting system (1) adapts to a shape of the support layer (25), **characterised in that** the at least one emission element (5) consists at least partially of a nonwoven and is connected to a decorative layer (21) which has at least one perforation opening (23, 35) for the outlet of light rays emitted by the at least one emission element (5), and the at least one emission element (5) engages in a form-fitting manner in the at least one perforation opening (23, 35) of the decorative layer (21) and forms, together with the decorative layer (21), a smooth surface which is substantially impervious to contamination.

2. Lighting system according to claim 1, wherein the at least one light source (17) is embedded as an integral component in the at least one light guide (3).

3. Lighting system according to claim 1 or 2, wherein the at least one emission element (5) is connected to the at least one light guide (3) via a transparent adhesive layer (7).

4. Lighting system according to claim 3, wherein the transparent adhesive layer (7) consists at least of a reactive film system or a thermoplastic adhesive film.

5. Lighting system according to one of the preceding claims, wherein the at least one light guide (3) is connected to at least one reflector (11) at least on a side facing away from the at least one emission element (5), wherein the at least one reflector (11) is configured to reflect light rays, generated by the at least one light source (17), towards the at least one emission element (5).

6. Lighting system according to claim 5, wherein the at least one reflector (11) is connected to an intermediate layer (15) on the at least one side facing away from the at least one emission element (5), which enables a robust adhesive connection of the lighting system (1) to a support material (25).

7. Lighting system according to claim 5 or 6, wherein the lighting system (1) comprises the at least one reflector (11).

8. Lighting system according to claim 6, wherein the intermediate layer (15) consists at least partially of a nonwoven.

9. Lighting system according to one of claims 5 to 8, wherein the at least one reflector (11) is at least partially processed, in particular at least partially printed, whereby a uniform emission of light rays back into the at least one light guide (3) results through the at least one reflector (11).

10. Manufacturing method for a lighting system (1) for an interior module of a vehicle, according to one of claims 5 to 9, in which the at least one light guide (3), that consists at least partially of silicone, is optically connected with at least one emission element (5), and the at least one emission element (5) is provided with light generated by the at least one light source (3) by means of the at least one light guide (3), and in which a silicone portion of the at least one light guide (3) is selected such that the lighting system (1) is flexible and upon being connected to a support layer (25) adapts to a shape of the support layer (25), **characterised in that** the at least one emission element (5) consists at least partially of a nonwoven and the at least one emission element (5) is bonded to a decorative layer (21) which has at least one perforation opening (23, 35), and in which the at least one light guide (3) is connected to the at least one reflector (11) via an adhesive layer (9) applied on the at least one light guide (3) and/or on the at least one reflector (11) in a printing process, and the at least one emission element (5) engages in a form-fitting manner in the at least one perforation opening (23, 35) of the decorative layer (21) and forms, together with the decorative layer (21), a smooth surface which is substantially impervious to contamination.

11. Manufacturing method according to claim 10, in which the at least one reflector (11) consists of silicone and is designed to be at least partially opaque locally by means of a printing process according to predetermined photometric requirements and in which the at least one reflector (11) is connected to an intermediate layer (15) which enables a robust adhesive connection of the lighting system (1) to a support material (25).

## Revendications

1. Système d'éclairage (1) pour un module intérieur d'un véhicule avec au moins une source de lumière (17), au moins un guide de lumière (3) et au moins un élément de rayonnement (5), dans lequel l'au moins un guide de lumière (3) se compose au moins partiellement de silicone, et dans lequel l'au moins un système de rayonnement (5) est relié par voie optique au niveau au moins d'un côté à l'au moins un guide de lumière (3), et en cas de fonctionnement du système d'éclairage (1) l'au moins un élément de rayonnement (5) est alimenté par l'au moins un guide de lumière (3) en lumière générée par l'au moins une source de lumière (17), dans lequel le système d'éclairage (1) est configuré de manière flexible de telle manière que le système d'éclairage (1) s'adapte lors de la liaison avec une couche support (25) à une forme de la couche support (25), **caractérisé en ce que** l'au moins un élément de rayonnement (5) se compose au moins partiellement d'un non-tissé et est relié à une couche décorative (21) qui présente au moins une ouverture de perforation (23, 35) pour la sortie de rayons lumineux irradiés par l'au moins un élément de rayonnement (5) et l'au moins un élément de rayonnement (5) vient en prise à complémentarité de formes dans l'au moins une ouverture de perforation (23, 35) de la couche décorative (21) et forme avec la couche décorative (21) une surface lisse qui est sensiblement étanche par rapport à la salissure.

2. Système d'éclairage selon la revendication 1, dans lequel l'au moins une source de lumière (17) est intégrée comme constituant inclusif dans l'au moins un guide de lumière (3).

3. Système d'éclairage selon la revendication 1 ou 2, dans lequel l'au moins un élément de rayonnement (5) est relié à l'au moins un guide de lumière (3) par le biais d'une couche de colle (7) transparente.

4. Système d'éclairage selon la revendication 3, dans lequel la couche de colle (7) transparente se compose au moins d'un système de film réactif ou d'un film adhésif thermoplastique.

5. Système d'éclairage selon l'une des revendications précédentes, dans lequel l'au moins un guide de lumière (3) est relié au moins sur un côté éloigné de l'au moins un élément de rayonnement (5) à au moins un réflecteur (11), dans lequel l'au moins un réflecteur (11) est configuré pour le réfléchissement de rayons lumineux générés par l'au moins une source de lumière (17) en direction de l'au moins un élément de rayonnement (5).

6. Système d'éclairage selon la revendication 5, dans lequel l'au moins un réflecteur (11) est relié au niveau d'un côté éloigné de l'au moins un élément de rayonnement (5) à une couche intermédiaire (15) qui permet une liaison de collage solide du système d'éclairage (1) avec un matériau support (25).

7. Système d'éclairage selon la revendication 5 ou 6, dans lequel le système d'éclairage (1) comporte l'au moins un réflecteur (11).

8. Système d'éclairage selon la revendication 6, dans lequel la couche intermédiaire (15) se compose au moins partiellement d'un non-tissé.

9. Système d'éclairage selon l'une des revendications 5 à 8, dans lequel l'au moins un réflecteur (11) est traité au moins partiellement, en particulier imprimé partiellement, par quoi un rayonnement uniforme de rayons lumineux est effectué en retour dans l'au moins un guide de lumière (3) par l'au moins un réflecteur (11).

10. Procédé de fabrication pour un système d'éclairage (1) pour un module intérieur d'un véhicule selon l'une des revendications 5 à 9, dans lequel l'au moins un guide de lumière (3) qui se compose au moins partiellement de silicone, est relié par voie optique à au moins un élément de rayonnement (5), et l'au moins un élément de rayonnement (5) est alimenté par l'au moins un guide de lumière (3) en lumière générée par l'au moins une source de lumière (3), et dans lequel une part de silicone de l'au moins un guide de lumière (3) est choisie de telle manière que le système d'éclairage (1) soit flexible et s'adapte lors de la liaison avec une couche support (25) à une forme de la couche support (25), **caractérisé en ce que** l'au moins un élément de rayonnement (5) se compose au moins partiellement d'un non-tissé et l'au moins un élément de rayonnement (5) est collé à une couche décorative (21) qui présente au moins une ouverture de perforation (23, 35), et dans lequel l'au moins un guide de lumière (3) est relié par le biais d'une couche de colle (9) appliquée dans un processus d'impression sur l'au moins un guide de lumière (3) et/ou sur au moins un réflecteur (11) à l'au moins un réflecteur (11) et l'au moins un élément de rayonnement (5) vient en prise à complémentarité de formes dans l'au moins une ouverture de perforation (23, 35) de la couche décorative (21) et forme avec la couche décorative (21) une surface lisse qui est sensiblement étanche par rapport à la salissure.

11. Procédé de fabrication selon la revendication 10, dans lequel l'au moins un réflecteur (11) se compose de silicone et est configuré au moins partiellement de manière imperméable à la lumière au moyen d'un procédé d'impression localement selon des exigences techniques en termes de lumière prédéfinies, et dans lequel l'au moins un réflecteur (11) est relié à une couche intermédiaire (15) qui permet une liaison de collage solide du système d'éclairage (1) avec un matériau support (25).
